# EUROPEAN PATENT APPLICATION

(11) **EP 4 434 316 A1**
(43) Date of publication of application: **25.09.2024**
(21) Application number: 24158002.6
(22) Date of filing: 16.02.2024
(51) Int. Cl.: A01D 34/416, A01D 34/73, A01G 3/06

(54) **EDGER BLADES**

(30) Priority: 23.02.2023 US 202363447761 P
(71) Applicant: Techtronic Cordless GP, Anderson, SC 29621 (US)
(72) Inventor: HOFFMAN, Ron, Anderson, 29621 (US); STEENWYK, Brett, Anderson, 29621 (US); WISEMAN, David, Anderson, 29621 (US)
(74) Representative: Novagraaf Group

(57) **Abstract**

A landscape edger, a blade, and a blade assembly for the landscape edger are provided. An edger blade includes a body having a top surface, a bottom surface, a central opening extending from the top surface to the bottom surface. The central opening is configured to receive a coupling of the edger assembly. The blade includes one or more lobes extending from the body. Each lobe includes a plurality of teeth extending from a periphery. The blade further includes a plurality of holes extending from the top surface to the bottom surface

## Description

### CROSS-REFERENCE TO RELATED APPLICATIONS

The present application claims priority to U.S. Provisional Patent Application Serial No. 63/447,761 filed on February 23, 2023, the disclosure of which is incorporated by reference herein in its entirety.

### FIELD

The present disclosure relates generally to edgers, and more particularly, blades for edger assemblies.

### BACKGROUND

Power tools are generally utilized to more efficiently perform work as compared to hand tools. However, this efficiency comes with certain drawbacks. For instance, because power tools allow operators to move more quickly, they allow for greater deviance in tolerances and less ergonomic handling configurations. By way of example, edgers allow operators to edge a ground area such as the edge of a grass lawn or flower bed. As a result, operators may move, rotate, or otherwise traverse the edger along the ground. While traversing the edger, various types of implements can be rotated to edge (e.g., cut or remove material) the desired location such as blades, strings, or the like. However, these implements may become worn or bent during the course of operation. Implements may also need to be periodically replaced or exchanged depending on the state of a used implement or the desired edging operation.

Accordingly, improved blades for edgers are desired in the art. In particular, blades for edgers which provide multiple cutting surfaces, reduce weight, and/or facilitate expedient installation would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, an edger blade is provided. The blade includes a body having a top surface, a bottom surface, a central opening extending from the top surface to the bottom surface. The central opening is configured to receive a coupling of the edger assembly. The blade comprises one or more lobes extending from the body. Each lobe comprises a plurality of teeth extending from a periphery. The blade further comprises a plurality of holes extending from the top surface to the bottom surface.

In accordance with one embodiment, an edger blade is provided. The blade includes a body having a top surface, a bottom surface, a central opening extending from the top surface to the bottom surface. The central opening is configured to receive a coupling of the edger assembly. The body comprising (e.g., is formed from) a non-metallic material. The blade comprises one or more lobes extending from the body. Each lobe comprises a plurality of teeth extending from a periphery.

In accordance with another embodiment, an edger blade is provided. The blade includes a body having a top surface, a bottom surface, a central opening extending from the top surface to the bottom surface. The central opening is configured to receive a coupling of the edger assembly. The blade comprises one or more lobes extending from the body. Each lobe comprises a plurality of teeth extending from a periphery. Each lobe has a varying radius from a first end of the lobe to the second end of the lobe.

In accordance with another embodiment, an edger blade assembly is provided. The edger blade assembly includes a first blade and a second blade. Each blade comprises: a body having a top surface, a bottom surface, a central opening extending from the top surface to the bottom surface, the central opening configured to receive a coupling of the edger assembly; the blade comprising one or more lobes extending from the body, each lobe comprising a plurality of teeth extending from a periphery; the blade further comprises a plurality of holes extending from the top surface to the bottom surface; wherein the bottom surface of the first blade and the bottom surface of the second blade face each other.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIGS. 1A-1C are perspective views of various edgers in accordance with embodiments of the present disclosure;
FIG. 2 is a perspective view of an edger head in accordance with embodiments of the present disclosure;
FIG. 3 is a bottom view of a body of the head of Fig. 2 in accordance with embodiments of the present disclosure;
FIG. 4 is a bottom view of the head of Fig. 2 with an attachment supported thereon in accordance with embodiments of the present disclosure;
FIG. 5 is a bottom view of the head and the attachment as shown in Fig. 4, with the lower housing removed in accordance with embodiments of the present disclosure;
FIG. 6 is a bottom view of the head and the attachment as shown in Fig. 4, with a retainer removed in accordance with embodiments of the present disclosure;
FIG. 7 is a cross-sectional side view of the head and the attachment as shown in Fig. 4, taken generally along line 7-7 in Fig. 4 in accordance with embodiments of the present disclosure;
FIG. 8 is a side view of a portion of the head of Fig. 2, with the body removed in accordance with embodiments of the present disclosure;
FIG. 9 is a top view of the head of Fig. 2 in accordance with embodiments of the present disclosure;
FIG. 10 is a side view of the head of Fig. 2 in accordance with embodiments of the present disclosure;
FIG. 11 is another side view of the head of Fig. 2 in accordance with embodiments of the present disclosure;
FIG. 12 is a perspective view of an edger blade in accordance with embodiments of the present disclosure;
FIG. 13 is a left view of the edger blade of Fig. 12 in accordance with embodiments of the present disclosure;
FIG. 14 is a right view of the edger blade of Fig. 12 in accordance with embodiments of the present disclosure;
FIG. 15 is a front view of the edger blade of Fig. 12 in accordance with embodiments of the present disclosure;
FIG. 16 is a back view of the edger blade of Fig. 12 in accordance with embodiments of the present disclosure;
FIG. 17 is a top view of the edger blade of Fig. 12 in accordance with embodiments of the present disclosure;
FIG. 18 is a bottom view of the edger blade of Fig. 12 in accordance with embodiments of the present disclosure;
FIG. 19 is a perspective view of another edger blade in accordance with embodiments of the present disclosure; and
FIG. 20 is a perspective view of two edger blades in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, edger blades can be used with edger assemblies to facilitate edging, trimming, cutting or other operations for lawn or yard maintenance. The edger blades can comprise a plurality of lobes (i.e., sections) that each comprise a plurality of teeth on the outer periphery of the edger blade. The teeth within each lobe can progressively increase in size from one end to another to provide a variety of cutting surfaces at different locations away from the central axis of the edger blade. The lobes may then be repeated one after another to define an overall edger blade having a symmetrical configuration. One or more holes may also be disposed in the body to reduce material, weight, cost, or otherwise provide balancing properties for the edger blade when rotated at high speed. The plurality of lobes, and plurality of progressively sized teeth within each lobe, provide multiple cutting opportunities when abutting debris or the like. Moreover, the multiple cutting surfaces can serve as redundancies should one tooth (e.g., the largest tooth) become damaged or removed. As such, the edger blades disclosed herein can provide beneficial cutting characteristics while also reducing potential damage to adjacent surfaces by reducing the amount of contact.

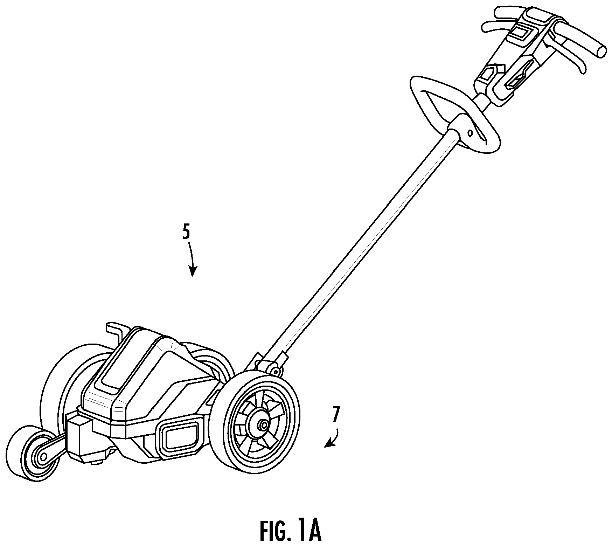

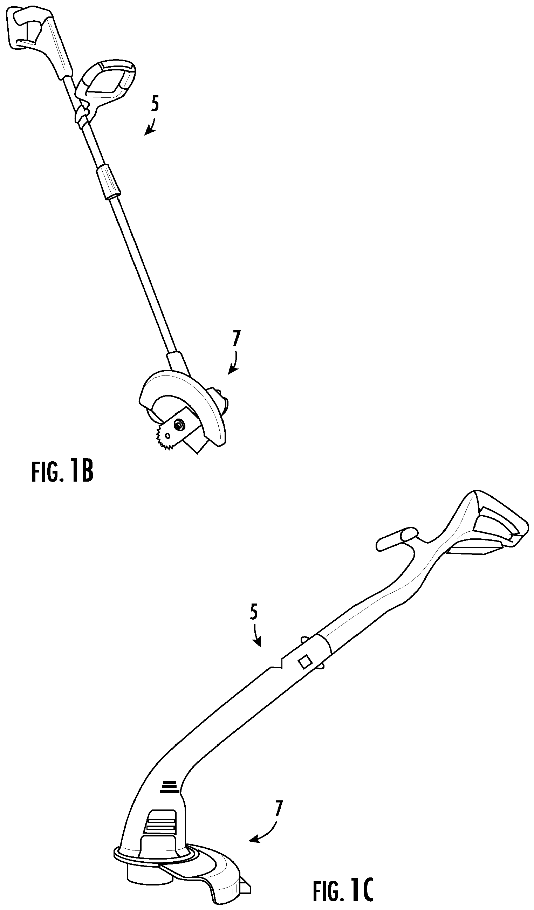

Referring now to the drawings, various exemplary edgers 5 are illustrated in FIGS. 1A-1C. The edgers 5 generally comprise base implement 7 that, as will be appreciated herein, can generally support an edger blade such as via selective attachment onto an edger head. The edger 5 can comprise a variety of configurations such as a wheeled base (FIG. 1A), an elongated handle with a vertical base (FIG. 1B), or an elongated handle with a horizontal base (FIG. 1C). Moreover, while exemplary edgers 5 are illustrated, it should be appreciated that these are not intended to be limiting and other variations or combinations may also be utilized with the edger blades disclosed herein.

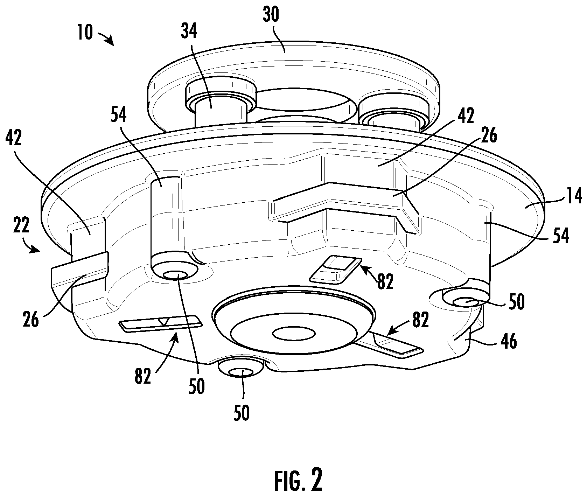

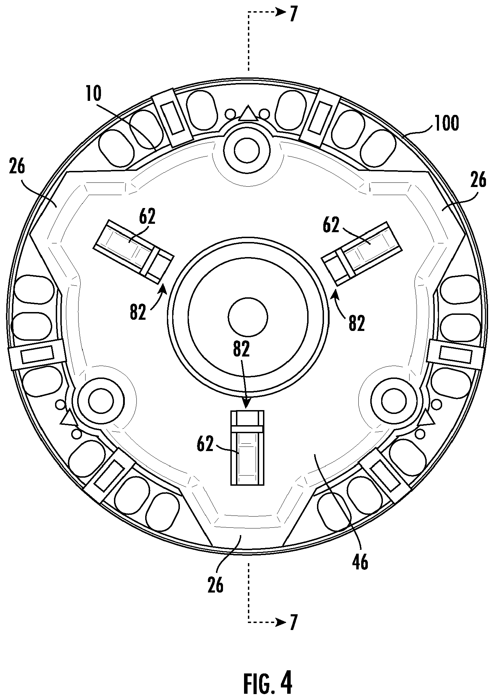

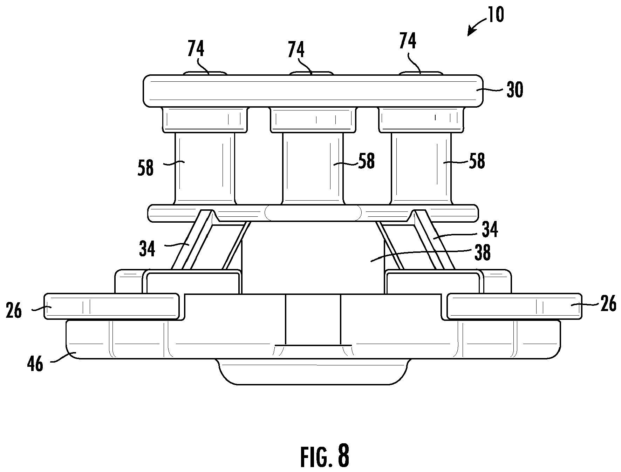

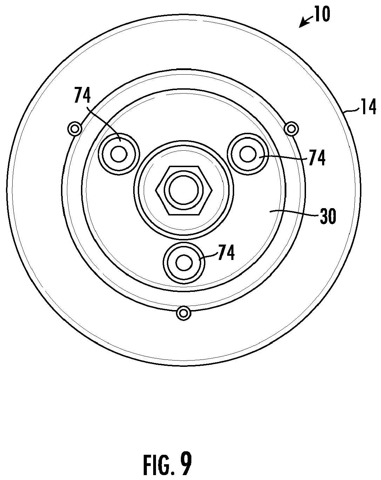

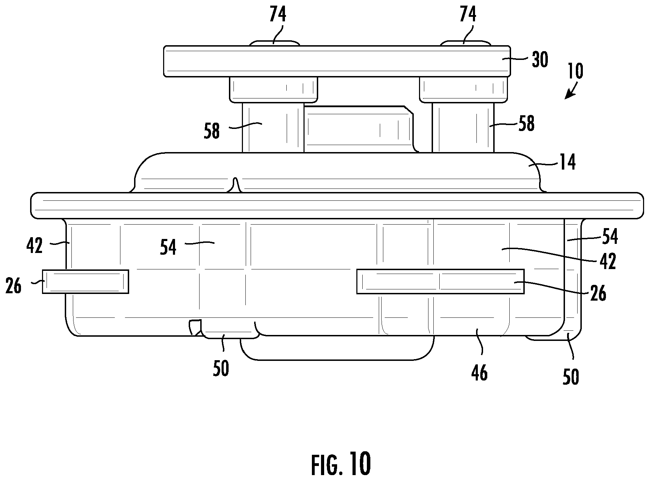

An edger head 10 is illustrated in FIGS. 2-11 for use on an exemplary edger (e.g., FIGS. 1A-1C), which may also be referred to or comprise a trimmer. Such an edger generally includes a shaft with a handle toward one end and a motor housing enclosing an electric motor with a motor-driven output or drive shaft, having an axis of rotation, for connection to an edger head on the other end. Various powered edgers (e.g., battery-powered, gas-powered, etc.) may be used with the edger head 10. Exemplary edgers and trimmers are described and illustrated in U.S. Patent No. 8,464,431, issued on June 18, 2013 , and in U.S. Patent No. 6,108,914, issued August 29, 2000 , the entire contents of both of which are hereby incorporated by reference.

As shown in FIGS. 2-11, the edger head 10 can generally include a body 14 rotatable about an axis of rotation A and defining an axial opening 18 for connection to the edger drive shaft S. The body 14 can have (see FIGS. 2-3, 6 and 10-11) a central projection and a plate defining an annular channel 22 for receiving a selected edger blade 100. The head 10 can include (see FIGS. 2, 4-5, 7 and 10-11) a retainer assembly cooperating with the body 14 to selectively retain the edger blade 100.

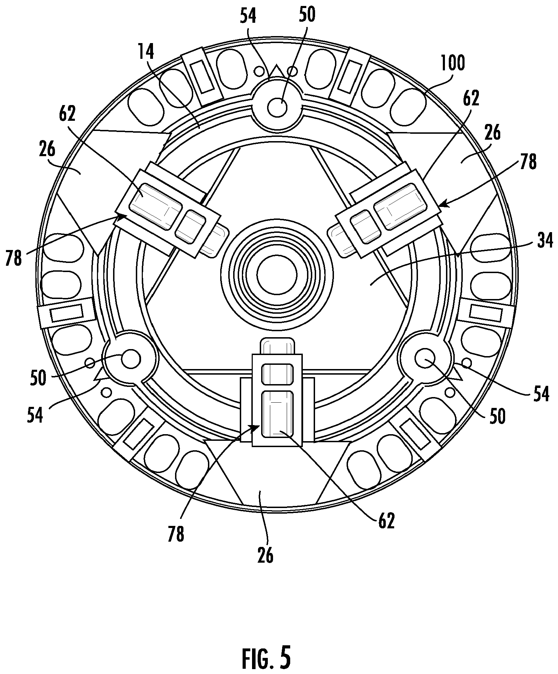

In the illustrated construction, the retainer assembly can include a number (e.g., three shown) of retainers 26 adjustable between a retaining position (FIGS. 2, 4-5, 7 and 10-11), in which the retainers 26 axially cover or block the channel 22 to retain the selected edger blade 100, and a release position, in which the retainers 26 axially open, uncover or unblock the channel 22 to allow the edger blade 100 to move relative to the channel 22 (e.g., to be removed or installed). As shown in FIG. 5, the retainers 26 can have substantially the same shape (e.g., trapezoidal) and are spaced substantially equidistant about the axis A (e.g., spaced about 120° apart).

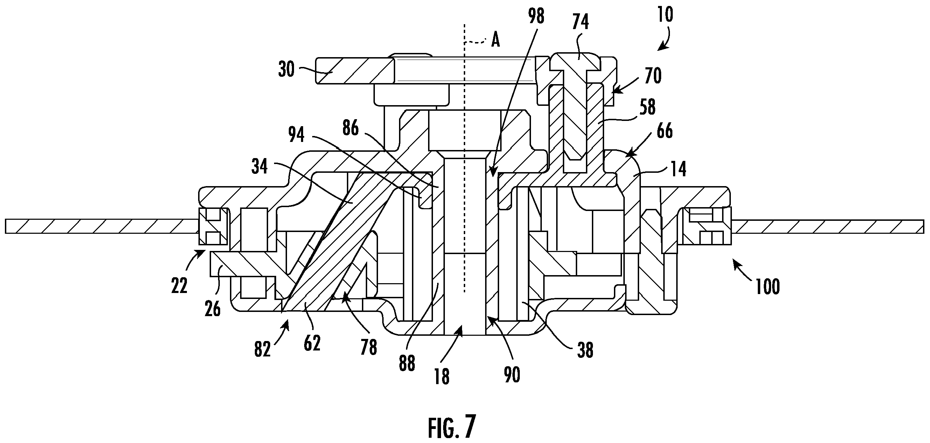

An actuating mechanism (see FIGS. 2 and 7; e.g., including a strike plate 30 and a retainer carrier 34) is operable by a user (e.g., by engaging the strike plate 30, a lever (not shown), a guard (not shown), etc.) to adjust the position of the retainers 26. A biasing member biases the retainers 26 to the retaining position; for example, in the illustrated construction (see FIG. 7), a spring 38 biases the actuating mechanism to a position corresponding to the retaining position of the retainers 26.

In the illustrated construction, the retainers 26 are radially movable between the radially-outward retaining position and the radially-inward release position, and the actuating mechanism is axially movable to adjust the radial position of the retainers 26. In other constructions (not shown), the retainers 26 and/or the actuating mechanism may be movable in another manner (e.g., circumferentially, axially, radially, combinations thereof, etc.) between the positions.

In other constructions, fewer or more than three retainers 26 may be provided. Also, each or all of the retainers 26 may have a different shape than illustrated. In addition, the retainers 26 may have a different spacing (e.g., equidistant based on the number of retainers 26, non-equidistant, etc.).

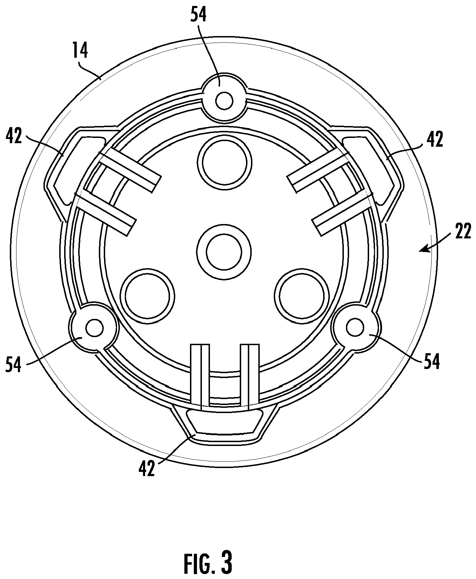

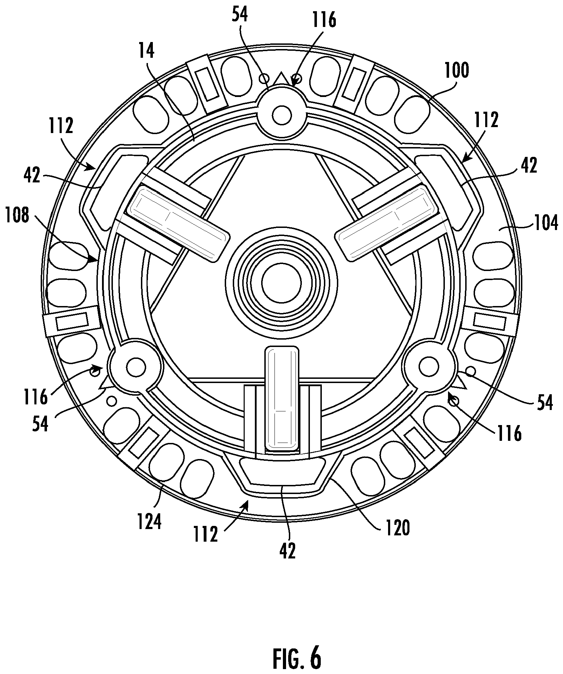

A drive arrangement is provided between the edger head 10 and the edger blade 100 to transfer rotational movement of the head 10 to the edger blade 100. In the illustrated construction, the body 14 includes (see FIGS. 3 and 6) a number (e.g., three shown) of radial projections 42 drivingly engageable with a supported edger blade 100. The illustrated projections 42 have substantially the same shape (e.g., trapezoidal) and are spaced substantially equidistant about the axis A (e.g., spaced about 120° apart). In the illustrated construction, the retainers 26 are positioned circumferentially in alignment with and overlying an associated projection 42 of the body 14. The projections 42 support the retainers 26 in a position (e.g., in the retaining position) and during movement between positions.

In other constructions (not shown), the body 14 may include fewer or more than three projections 42. Also, each or all of the projections 42 may have a different shape than illustrated. In addition, the projections 42 may have a different spacing (e.g., equidistant based on the number of projections 42 on the body 14, non-equidistant, etc.). Further, the projections 42 may extend in and/or engage the edger blade 100 in a different manner (e.g., axially, circumferentially, combinations thereof, etc.).

The head 10 also includes (see FIGS. 2, 4, 7-8 and 10-11) a lower housing 46 connectable to the body 14, for example, with fasteners 50, to house and/or retain components of the head 10 as a unit. The body 14 includes (see FIGS. 3 and 5-6) an associated boss 54 for each fastener 50, and each illustrated boss 54 projects radially into the channel 22. The lower housing 46 covers the lower portion of the components of the head 10 to inhibit cut material, debris, etc. from interfering with operation of the components. The lower housing 46 is sized to allow installation and removal of the edger blade 100.

As mentioned above, the actuating mechanism is axially movable to cause radial movement of the retainers 26. As also mentioned above, the actuating mechanism includes the strike plate 30 and the retainer carrier 34.

The illustrated strike plate 30 is substantially ring-shaped and forms an upper surface of the head 10. The strike plate 30 and the carrier 34 are axially movable along the axis of rotation A. The carrier 34 includes axial projections 58 and angled projections 62.

The body 14 defines axial openings 66 radially-spaced from and about the opening 18. The strike plate 30 defines recesses 70, and each axial projection 58 of the carrier 34 is inserted through an opening 66 in the body 14 and received in a recess 70 in the strike plate 30. A number (e.g., three shown) of fasteners 74 connects the strike plate 30 and the carrier 34 to capture the body 14 therebetween.

The retainers 26 are supported on the carrier 34 and define angled openings 78 to receive respective angled projections 62 of the carrier 34. The lower housing 46 defines slots 82 allowing axial movement of the carrier 34 toward the release position of the retainers 26.

The body 14 includes a central boss 86 defining the opening 18, and the lower housing 46 has a complementary boss 88 and opening 90 to receive the shaft S. The carrier 34 has a ridge 94 defining a central opening 98 receiving the boss 86 of the body 14 to guide axial movement of the carrier 34.

The spring 38 is positioned around the bosses 86, 88, and the ridge 94 on the carrier 34 provides a guide for the spring 38. The spring 38 is positioned between the lower housing 46 and the carrier 34 to bias the carrier 34, along with the strike plate 30, upwardly. As a result, the retainers 26 are biased to the retaining position.

While the edger head 10, including its body 14 and supporting components, are disclosed and illustrated herein, it should be appreciated that these are exemplary embodiments and that additional or alternative variations may also be realized within the scope of this disclosure.

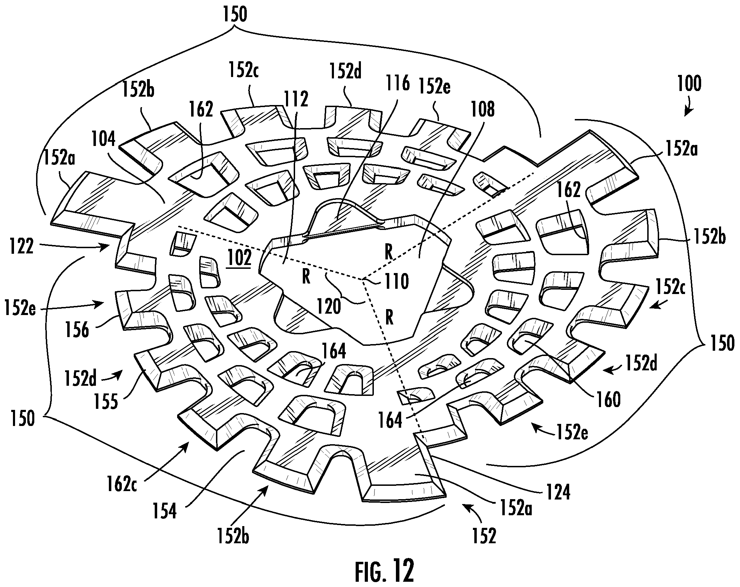

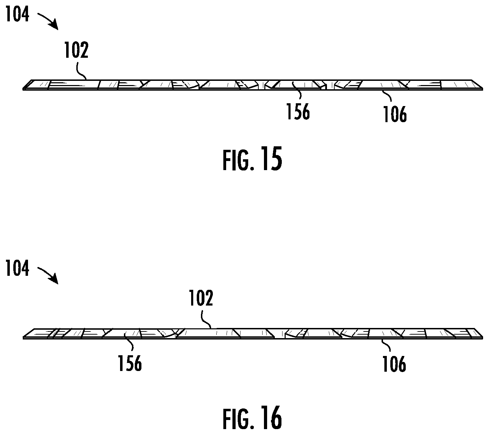

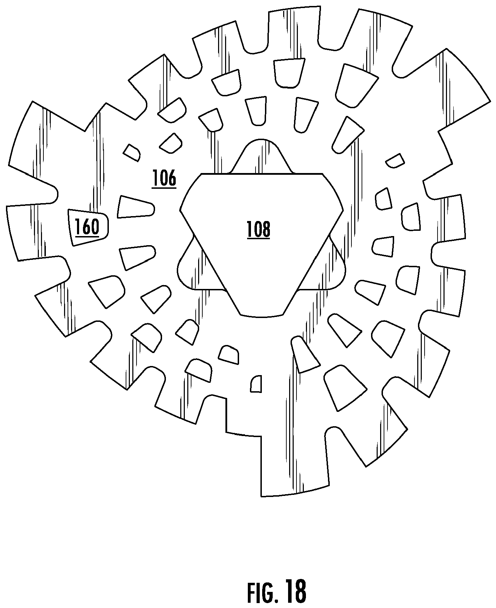

With additional reference to FIGS. 12-18, the edger head 10 (FIGS. 2-11) or another portion of an edger (FIGS. 1A-1C) may thereby selectively receive and secure one or more edger blades 100. The blades 100 comprise working implements with peripheral cutting edges that can be rotated around a central axis while secured to the edger head 10 for edging a lawn, flower bed, cutting debris, or the like. The edger blade 100 can generally include a body 104 defining a central opening 108 that can engage the body 14 of the head 10 (e.g., in the channel 22) as disclosed herein.

In some embodiments, the edger blade 100 defines a number (e.g., three shown) of notches 112 and a number (e.g., three shown) of recesses 116 around the perimeter of the opening 108. The notches 112 are complementary to and drivingly engageable with the projections 42 on the body 14 to cooperate to provide the drive arrangement. The illustrated notches 112 are shaped (e.g., trapezoidal) and positioned (e.g., equidistant; about 120° apart) to receive the projections 42. The recesses 116 are shaped and positioned to receive the bosses 54. In the illustrated construction, the edger blade 100 is supportable on the body 14 in any position in which the projections 42 engage the notches 112.

In other constructions (not shown), edger blade 100 may include fewer or more than three notches 112. Also, each or all of the notches 112 may have a different shape than illustrated. In addition, the notches 112 may have a different spacing (e.g., equidistant based on the number of notches 112, non-equidistant, etc.). In constructions in which the interface between the body 14 and the edger blade 100 is non-uniform (e.g., the projections 42 and corresponding notches 112 have a different shape and/positioning), the edger blade 100 may be installed in a limited number of rotational positions relative to the body 14 (e.g., keyed so that the blade can only be assembled on the body 14 in the proper direction for rotation). In other constructions (not shown), the projections 42 and notches 112 may be reversed and positioned on the other side of the body 14 and the edger blade 100. In even other embodiments, the edger blade 100 may be bolted, clamped, or otherwise secured to an edger without the use of a quick release mechanism.

The body 104 can include one or more lobes 150 disposed about an outer periphery of the edger blade 100. Each lobe 150 may define a segment 120 of the blade 100 defined by a radius R from a center 110 of the central opening 108 to a first end 122 of the lobe 150 and a radius R from a center of the central opening 108 to a second end 124 of the lobe 150. Each lobe 150 comprises a plurality of teeth 152 separated by gaps 154 to provide multiple cutting implements. For instance, as illustrated in FIGS. 12-18, each lobe 150 can comprise five separate teeth 152a, 152b, 152c, 152d, 152e. However, the number of teeth 152 per lobe 150 can be increased or decreased.

The teeth 152 within each lobe 150 can vary in size to provide variation in length extending away from the body 104, e.g., from a center of the blade 110 within the opening 108, and/or width along the periphery. For instance, as illustrated in FIGS. 12-18, the teeth 152 may increase in size (e.g., length extending away from the body 104) as they progress from one end of the lobe 150 to the other. In such embodiments, one lobe 150 may transition into another lobe 150, such as by having the largest tooth 152a of one lobe 150 adjacent the smallest tooth 152e of the next lobe 150.

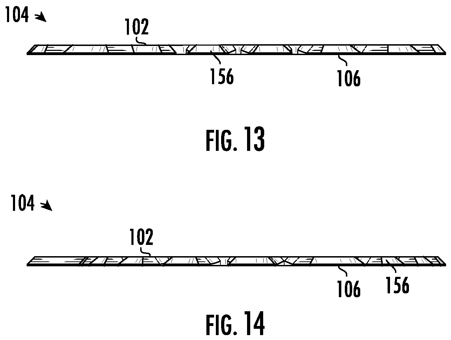

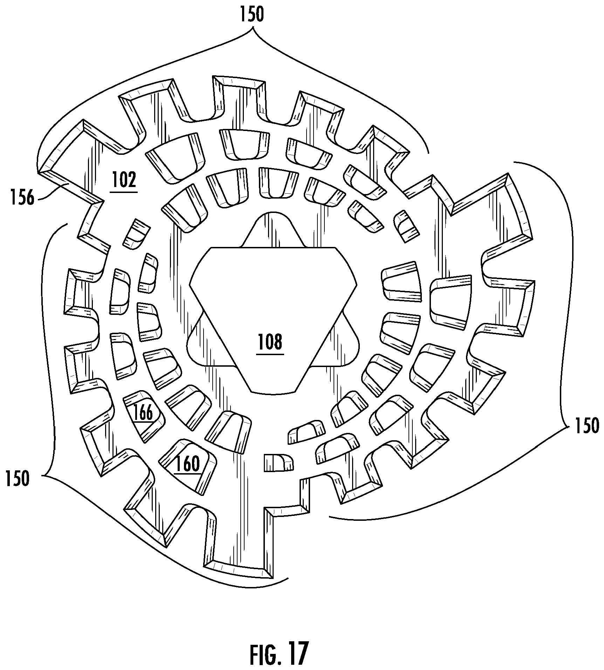

The teeth 152 and/or the entire outer periphery of the edger blade 100, can comprise a cutting edge 155. The cutting edge 155 can comprise an edge surface that makes contact with the ground, foliage, or the like during the edging operation. In some embodiments, the cutting edge 155 may comprise a sharpened edge. For instance, as illustrated in FIGS. 12-18, the cutting edge 155 can comprise a tapered surface 156 that is tapered from the top side 102 of the edger blade 100 to the bottom side 106 of the edger blade 100 (an arrangement also known as a chisel edge or chisel grind). In some embodiments, the cutting edge 155 may comprise a sharpened apex between the top side 102 and the bottom side 106 of the edger blade 100 (e.g., a V-edge, flat grind, or compound bevel). As best seen in FIGS. 17-18, the top side 102 of the blade 100 may comprise the tapered surface 156, and the bottom side 106 of the blade 100 may be formed as a generally planar surface, i.e., without tapered or beveled surfaces. The tapered surface 156 may be provided about an entire circumference of the body 104, including along a periphery of each of the teeth 152 and the gaps 154. For example, tapered surface 156 may include the leading edge of the blade in the direction of rotation (e.g., the edge associated with second end 124). Additionally, in some aspects of the invention, the top side 102 of the body 104 may form a tapered or declining surface extending radially outward from a center axis. Stated differently, the top surface 102 may decline or taper from a center of the body 104 to a peripheral edge of the body 104 at the tapered surface 156. As shown most clearly in FIGS. 13-18, the blade may be positioned with the tapered surface 156, facing away from the base implement 7 during cutting (e.g., for an edging operation) or reversed with the flat or bottom edge 106 facing away from the base implement 7 during cutting (e.g., for a brush cutting operation).

The body 104 may also comprise any number of lobes 150. For instance, the body 104 may comprise a plurality of similar lobes 150 in a repetitious configuration. As illustrated in FIGS. 12-18, the body 104 may comprise three lobes 150, each having the same length about the periphery. That is, each of the three lobes 150 comprise a similar amount of the periphery such that each lobe 150 comprises a 120 degree arc. However, the number of lobes and the consistency in configurations may also vary. In some embodiments, the number of lobes 150 may be greater than or less than three. Moreover, in some embodiments, one or more lobes 150 may be larger, longer, or otherwise different than the other lobes 150.

The edger blade 100 can further comprise a plurality of holes 160 in the body 104. For instance, each lobe 150 can comprise a similar configuration of holes 160 that is repeated in the next lobe 150. The holes 160 can provide, for example, weight savings, material savings, and/or balancing properties to the edger blade 100. On the top side 102, each hole 160 may be surrounded by a tapered surface 164. The surfaces forming the holes may also function as cutting surfaces for material (e.g., grass) that may fall within the holes during rotary cutting. In some embodiments, such as that illustrated in FIGS. 12-18, the holes 160 can comprise a plurality of rows of holes moving from the central opening 108 towards the outer edge. Moreover, the holes 160 can increase in size as the holes 160 approach the outer edge of the edger blade. For instance, the holes 160 may be trapezoidal in shape, circular in shape, ovular in shape, or any other suitable shape. The holes 160 may further have an increasing size (e.g., larger trapezoids as illustrated) as they approach the outer periphery of the edger blade 100. In some aspects, as illustrated in FIGS. 12-18, each row 168 may include the same number of holes 160 within a respective lobe 150 as the number of teeth 152 within the lobe 150. For instance, FIGS. 12-18 illustrate each row 168 including five holes 160 within each lobe.

In some aspects, as the teeth 152 of the blade 100 wear down, the holes 160 may become exposed on a peripheral edge of the blade 100, e.g., when the blade wears down through a peripheral edge 162 of a hole 160. In this manner, the peripheral edge 162 may form a new cutting edge. Described differently, when the blade wears down through the peripheral edge 162 of a hole, a new cutting tooth may be formed or exposed about an edge of the blade 100.

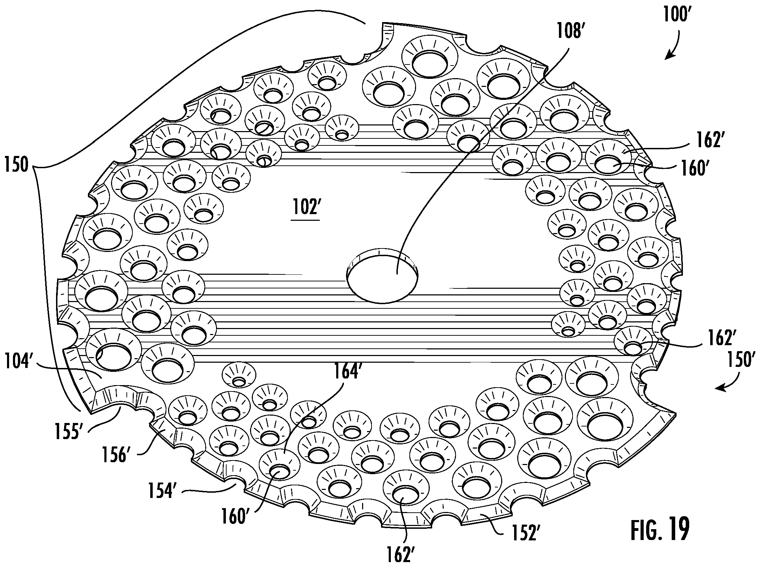

With additional reference to FIG. 19, another exemplary edger blade 100' is illustrated such as for use with an edger head 10 (FIGS. 2-11) or another portion of an edger (FIGS. 1A-1C). Similar to the blades 100 illustrated in FIGS. 12-18, the blade 100' illustrated in FIG. 19 comprise working implements with peripheral cutting edges that can be rotated around a central axis while secured to the edger head 10 for edging a lawn, flower bed, cutting debris, or the like. The edger blade 100' can generally include a body 104' defining a central opening 108' that can engage the body 14 of the head 10 (e.g., in the channel 22) as disclosed herein.

In some embodiments, the body 104' can include one or more lobes 150' disposed about an outer periphery of the edger blade 100'. Each lobe 150' comprises a plurality of teeth 152' separated by gaps 154' to provide multiple cutting implements. For instance, as illustrated in FIG. 19, each lobe 150' can comprise eight separate teeth 152'. However, the number of teeth 152' per lobe 150' can be increased or decreased.

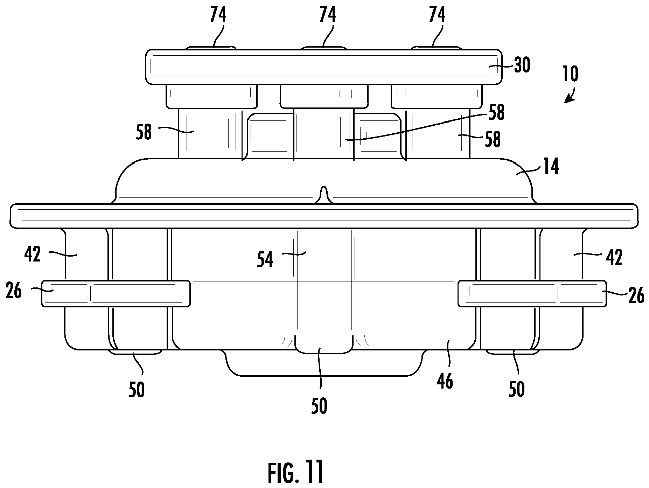

The teeth 152' within each lobe 150' can vary in size to provide variation in length extending away from the body 104' and/or width along the periphery. For instance, as illustrated in FIG. 19, the teeth 152' may increase in size (e.g., length extending away from the body 104') as they progress from one end of the lobe 150' to the other. In such embodiments, one lobe 150' may transition into another lobe 150', such as by having the largest tooth 152' of one lobe 150' adjacent the smallest tooth 152' of the next lobe 150'. In some aspects, as shown in FIG. 19, each of the teeth 152 may have a same or similar shape, such as a rounded, e.g., semi-circular, shape, or any other suitable shape (e.g., the trapezoidal shape illustrated in the blade 100 in FIG. 11).

The teeth 152' and/or the entire outer periphery of the edger blade 100', can comprise a cutting edge 155'. The cutting edge 155' can comprise an edge surface that makes contact with the ground, foliage, or the like during the edging operation. In some embodiments, the cutting edge 155' may comprise a sharpened edge. For instance, as illustrated in FIG. 19, the cutting edge 155' can comprise a tapered surface 156' that is tapered from the top side of the edger blade 100' to the bottom side of the edger blade 100' (also known as a chisel edge or chisel grind). In some embodiments, the cutting edge 155' may comprise a sharpened apex between the top side and the bottom side of the edger blade 100' (e.g., a V-edge, flat grind, or compound bevel). The blade may be positioned with the tapered or declining surface 156' facing out during cutting (e.g., for an edging operation) or reversed with the flat edge facing out during cutting (e.g., for a brush cutting operation).

The body 104' may also comprise any number lobes 150'. For instance, the body 104' may comprise a plurality of similar lobes 150' in a repetitious configuration. As illustrated in FIG. 19, the body 104' may comprise three lobes 150', each having the same length about the periphery. That is, each of the three lobes 150' comprise a similar amount of the periphery such that each lobe 150' comprises a 120 degree arc. However, the number of lobes and the consistency in configurations may also vary. In some embodiments, the number of lobes 150' may be greater than or less than three. Moreover, in some embodiments, one or more lobes 150' may be larger, longer, or otherwise different than the other lobes 150'.

The edger blade 100' can further comprise a plurality of holes 160' in the body 104'. For instance, each lobe 150' can comprise a similar configuration of holes 160' that is repeated in the next lobe 150'. The holes 160' can provide, for example, weight savings, material savings, or balancing properties to the edger blade 100'. The surfaces forming the holes may also function as cutting surfaces for material (e.g., grass) that may fall within the holes during rotary cutting. In some embodiments, such as that illustrated in FIG. 19, the holes 160' can comprise a plurality of rows of holes moving from the central opening 108' towards the outer edge. Moreover, the holes 160' can increase in size as the holes 160' approach the outer edge of the edger blade. For instance, the holes 160' may be circular in shape, ovular in shape, or any other suitable shape (e.g., the trapezoidal shape illustrated in the blade 100 in FIG. 11). The holes 160' may further have an increasing radius (e.g., larger circles as illustrated) as they approach the outer periphery of the edger blade 100'.

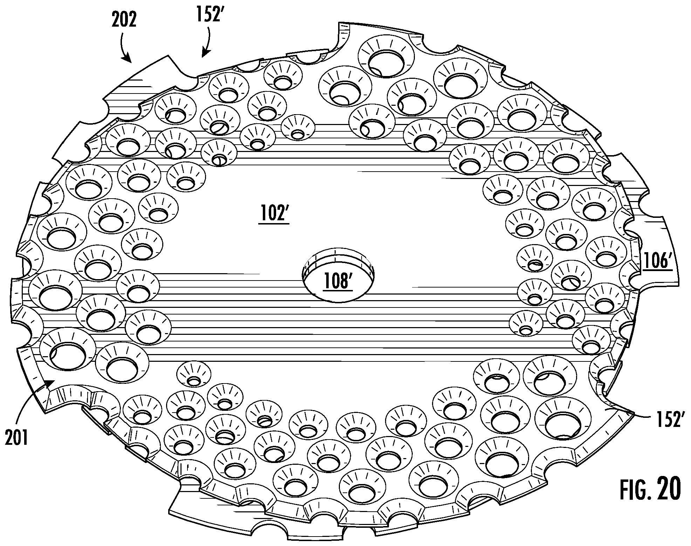

With additional reference to FIG. 20, a perspective view of two edger blades is illustrated, such as can be mounted adjacently on the edger head 10 illustrated in FIGS. 2-11. The two edger blades can be stacked against one another with the tapered surfaces facing away from one another. Such embodiments can provide a more versatile collective cutting edge where the two edger blades can combine to provide a greater number of cutting surfaces. For instance, the two edger blades 201 and 202 may be offset as illustrated such that their respective lobes are disposed at different locations. For instance, as illustrated in FIG. 20, the edger blades 201 and 202 each may include three lobes equally distributed about a circumference of the body 104, so that each blade 201 and 202 has repeating lobes every 120 degrees. In this configuration, the edger blades 201 and 202 may be offset by about 60 degrees relative to each other so that the largest tooth 152 of each lobe 150 of the first edger blade 201 is centered between each of the largest teeth 152 of each lobe 150 of the second edger blade 202. However, it is to be understood that any degree of offset between the edger blades 201 and 202 may be suitable for a cutting operation to increase the number of combined cutting surfaces.

While FIGS. 12-20 illustrate an exemplary edger blade 100, it should be appreciated that other edger blades 100 may further be realized. For instance, different configurations of lobes, teeth, transitions, holes, or other features may also be realized. In even some embodiments, a set of edger blades 100 may be provided. The set of edger blades 100 may all be of the same configuration, or may be of various configurations. For instance, the set of edger blades 100 may comprise a plurality of edging blades that have different sized lobes 150, different shaped teeth 152, different amounts of holes 160, different thicknesses, different radii, different materials, or other different properties.

The edger blade 100, 100' can comprise a variety of material or materials. For example, in some embodiments the edger blade 100, 100' may comprise a plastic material. In other embodiments, the edger blade 100, 100' may comprise a metal material such as steel. In even other embodiments, the edger blade 100, 100' may comprise a combination of materials, such as a first material about its body 104 and a second, different material to form the teeth 152. In some embodiments, the edger blade 100, 100' may be formed from a non-metallic material. For instance, the edger blade 100, 100' formed from a non-metallic material may be manufactured by injection molding. The non-metallic material may include a composite material. Nonlimiting examples of composite materials used to form the body of an edger blade of the present invention include reinforced nylon and reinforced ultra-high molecular weight polyethylene (UHMW-PE), in which the reinforcement may be provided by fibers, e.g., glass fibers, carbon fibers, or other suitable fiber reinforcement material. Such embodiments and non-metallic materials may provide a gentler action on the side of the concrete or other hard surface driveway or sidewalk compared to steel, iron, or other metal-based edger blades. This can facilitate an edger that is much quieter to operate, eliminates sparks created when the metal strikes the concrete or other hard surface, and prevents damage to the concrete or other hard surface.

Further aspects of the invention are provided by one or more of the following embodiments:
An edger blade for an edger assembly comprises a body having a top surface, a bottom surface, a central opening extending from the top surface to the bottom surface. The central opening is configured to receive a coupling of the edger assembly. The blade comprises one or more lobes extending from the body. Each lobe comprises a plurality of teeth extending from a periphery. The blade further comprises a plurality of holes extending from the top surface to the bottom surface.

The edger blade of any one or more of the embodiments, wherein the plurality of holes are arranged radially around the central opening.

The edger blade of any one or more of the embodiments, wherein the plurality of teeth of each lobe vary in size.

The edger blade of any one or more of the embodiments, wherein the plurality of teeth of each lobe are arranged smallest to largest about the periphery of the blade.

The edger blade of any one or more of the embodiments, the one or more lobes comprising at least two lobes, wherein the smallest tooth of each lobe is arranged adjacent to the largest tooth of an adjacent lobe.

The edger blade of any one or more of the embodiments, comprising a tapered surface extending from the top surface to the bottom surface about a periphery of the blade.

The edger blade of any one or more of the embodiments, wherein the tapered surface extends about an entire periphery of the blade.

The edger blade of any one or more of the embodiments, comprising a tapered surface extending from the top surface to the bottom surface surrounding at least one hole of the plurality of holes.

The edger blade of any one or more of the embodiments, wherein each hole of the plurality of holes is surrounded by a tapered surface extending from the top surface to the bottom surface.

The edger blade of any one or more of the embodiments, wherein the plurality of holes vary in size.

The edger blade of any one or more of the embodiments, wherein each lobe defines a segment of the blade extending between the central opening and the periphery of the blade, the plurality of holes within each segment are arranges in rows, further wherein the number of the plurality of holes within each row of each segment equals the number of plurality of teeth within each respective segment.

The edger blade of any one or more of the embodiments, wherein the plurality of holes in each segment vary in size, wherein the plurality of holes within each segment are arranged smallest to largest.

An edger blade for an edger assembly, the blade comprising: a body having a top surface, a bottom surface, a central opening extending from the top surface to the bottom surface, the central opening configured to receive a coupling of the edger assembly; the body comprising a non-metallic material; the blade comprising one or more lobes extending from the body, each lobe comprising a plurality of teeth extending from a periphery.

The edger blade of any one or more of the embodiments, wherein the body and the one or more lobes are formed from a unitary piece of material.

The edger blade of any one or more of the embodiments, wherein the non-metallic material comprises a composite material.

An edger blade for an edger assembly, the blade comprising: a body having a top surface, a bottom surface, a central opening extending from the top surface to the bottom surface, the central opening configured to receive a coupling of the edger assembly; the blade comprising one or more lobes extending from the body, each lobe comprising a plurality of teeth extending from a periphery, wherein each lobe has a varying radius from a first end of the lobe to the second end of the lobe.

The edger blade of any one or more of the embodiments, the one or more lobes comprising at least two lobes, wherein the smallest tooth of each lobe is arranged adjacent to the largest tooth of an adjacent lobe.

An edger blade assembly comprising: a first blade and a second blade, each blade comprising: a body having a top surface, a bottom surface, a central opening extending from the top surface to the bottom surface, the central opening configured to receive a coupling of the edger assembly; the blade comprising one or more lobes extending from the body, each lobe comprising a plurality of teeth extending from a periphery; the blade further comprising a plurality of holes extending from the top surface to the bottom surface; wherein the bottom surface of the first blade and the bottom surface of the second blade face each other.

The edger blade assembly of any one or more of the embodiments, wherein the first blade is rotationally offset from the second blade.

The edger blade assembly of any one or more of the embodiments, wherein the bottom surface of the first blade is planar and the bottom surface of the second blade is planar.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An edger blade for an edger assembly, the blade comprising: a body having a top surface, a bottom surface, a central opening extending from the top surface to the bottom surface, the central opening configured to receive a coupling of the edger assembly; the blade comprising one or more lobes extending from the body, each lobe comprising a plurality of teeth extending from a periphery; the blade further comprising a plurality of holes extending from the top surface to the bottom surface.

2. The edger blade of claim 1, wherein the plurality of holes are arranged radially around the central opening.

3. The edger blade of claim 1, wherein the plurality of teeth of each lobe vary in size, preferably wherein the plurality of teeth of each lobe are arranged smallest to largest about the periphery of the blade.

4. The edger blade of claim 3, the one or more lobes comprising at least two lobes, wherein the smallest tooth of each lobe is arranged adjacent to the largest tooth of an adjacent lobe.

5. The edger blade of claim 1, comprising a tapered surface extending from the top surface to the bottom surface about a periphery of the blade, preferably wherein the tapered surface extends about an entire periphery of the blade.

6. The edger blade of claim 1, comprising a tapered surface extending from the top surface to the bottom surface surrounding at least one hole of the plurality of holes, preferably wherein each hole of the plurality of holes is surrounded by a tapered surface extending from the top surface to the bottom surface.

7. The edger blade of claim 1, wherein the plurality of holes vary in size.

8. The edger blade of claim 1, wherein each lobe defines a segment of the blade extending between the central opening and the periphery of the blade, the plurality of holes within each segment are arranges in rows, further wherein the number of the plurality of holes within each row of each segment equals the number of plurality of teeth within each respective segment, preferably wherein the plurality of holes in each segment vary in size and the plurality of holes within each segment are arranged smallest to largest.

9. The edger blade of claim 1, wherein the body comprises a non-metallic material; preferably wherein the non-metallic material comprises a composite material.

10. The edger blade of claim 1, wherein the body and the one or more lobes are formed from a unitary piece of material.

11. The edger blade of claim 1, wherein each lobe has a varying radius from a first end of the lobe to the second end of the lobe.

12. The edger blade of claim 1, the one or more lobes comprising at least two lobes, wherein the smallest tooth of each lobe is arranged adjacent to the largest tooth of an adjacent lobe.

13. An edger blade assembly comprising: a first blade comprising the blade of claim 1, a second blade comprising the blade of claim 1; wherein the bottom surface of the first blade and the bottom surface of the second blade face each other.

14. The edger blade assembly of claim 13, wherein the first blade is rotationally offset from the second blade.

15. The edger blade assembly of claim 13, wherein the bottom surface of the first blade is planar and the bottom surface of the second blade is planar.
